# EUROPEAN PATENT SPECIFICATION

(11) **EP 0 383 277 B1**
(45) Date of publication and mention of the grant of the patent: **30.11.1994**
(21) Application number: 90102825.8
(22) Date of filing: 13.02.1990
(51) Int. Cl.: H04Q 7/04, H04M 1/72

(54) **Operating system of a mobile radio telephone**
Betriebssystem eines mobilen Funktelefons
Système d'exploitation d'un radio-téléphone mobile

(30) Priority: 16.02.1989 FI 890766
(43) Date of publication of application: 22.08.1990
(73) Proprietor: NOKIA MOBILE PHONES LTD., 24101 Salo (FI)
(72) Inventor: Veikkolainen, Paavo Erkki Olavi, SF-90230 Oulu (FI); Ranta, Jukka Tapio, SF-24100 Salo (FI); Mattson, Hannu Tapani, SF-24130 Salo (FI)
(74) Representative: Sajda, Wolf E., Dipl.-Phys.

(56) References cited:
- EP-A- 0 005 256
- DE-B- 2 832 374
- US-A- 4 363 935

## Description

The present invention relates to an operating system of a mobile radio telephone comprising a transceiver unit, which comprises a handset hook fastened to the unit or connected to it with a cable, and at least one handset in wireless communication with the transceiver unit. In this context a mobile radio telephone refers to a radio telephone which is normally used in a vehicle and which may be used as a portable unit when the equipment belonging to the mobile phone, or a part of it, is detached from the vehicle.

Normally the user interface of a mobile radio telephone consists of a handset and an operating device. The handset and the operating device may be integrated or physically separated.

If the handset and the operating device are integrated, the operating device part is located on the rear side of the handset. Such an entirety is in this context called an operating handset device. Normally this entirety is connected with a cable to the hook, which has a cable connection to the radio telephone or transceiver unit. The device is normally on hook when not in use, i.e. when no phone call is in progress, or when a phone call is in progress but in so called handsfree operation.

When the handset and operating device are physically separated, the operating device usually is ergonomically located within the driver's reach by means of a so-called swans neck.

The object of the present invention is further to improve known devices and to provide such an arrangement that renders the use of a radio telephone even more versatile, whereby also for instance a passenger in the back seat of a car easily can use the radio telephone. In the system based on the invention, the handset is replaced by a wireless handset based on infrared communication. This wireless handset may also be in parallel to the normal handset. The operating device is further replaced by, or part of its functions are located in or concentrated in the wireless remote control, which is based on infrared communication as well. The main features of the invention will be apparent from the following description and the claims.

A wireless connection between the operating device and the transceiver unit is mentioned as a possibility in the earlier US-patent no. 4,291,411. However, in the preferred embodiment there is a cable connection, and if the connection is wireless, the operation must be controlled with a directional switch. Thereby the handset contains all parts of the operating device, and thus a person temporarily using the radio telephone, travelling in the back seat for example, must be able to master all facilities of the telephone.

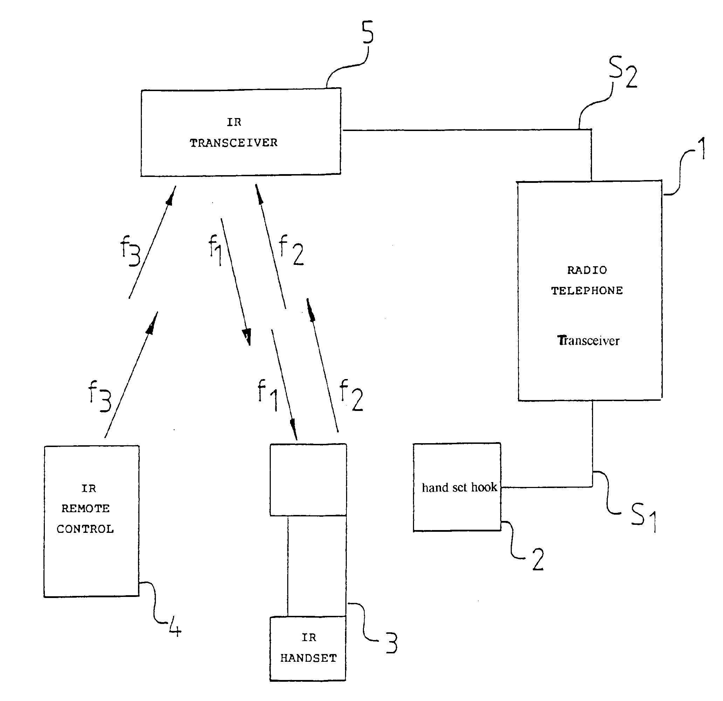

The present invention as well as its other features and advantages are described in greater detail below with refererence to the attached drawing, which schematically shows an operating system according to the invention.

In the drawing the reference numeral 1 denotes the radio telephone or the transceiver. The handset hook 2 is connected to it by the cable s₁.

The handset is indicated by 3 and the physically separated remote control by 4.

The transceiver unit 1 is connected through a second cable s₂ to a physically separated infrared transceiver 5, which is in wireless communication with the handset 3 and the remote control 4, and in cable communication with the radio telephone 1.

The transmission frequency f₁ of the infrared transceiver 5 may be e.g. 250 kHz, which then is also the receiving frequency of the handset 3. The transmission frequency f₂ of the handset may be e.g. 350 kHz, which then is also the first receiving frequency f₂ of the unit 5. The unit 5 further receives signals from the remote control 4 on the frequency f₃, which may be e.g. 445 kHz.

The handset 3 is preferably accumulator operated, the hook including charging contacts charging the handset accumulator when the handset is on hook. The hook 2 receives the voltage supply (e.g. 0 and +12 Volt) via the cable s₁, which also carries the signal from the hook to the radio telephone indicating for example whether the handset is on hook or not.

The remote control 4 conveys only control commands, and it includes no receiver. Preferably it is battery operated and located ergonomically with regard to the driver, for instance fastened to a spoke inside the rim of the steering wheel. Thus the remote control is directly in the visual field of the driver and in a normal driving position immediately within reach of the hand, thus not distracting from driving when the control is used.

The cable s₂ conveys the supply voltage (e.g. 0 and 12 Volt) to the infrared transceiver 5, and further at least the audio signal from the radio telephone to the earphone of the handset, the signal from the microphone of the handset to the radio telephone, the signal of the infrared transmitter, and the commands from the remote control controlling the operation of the radio telephone.

The infrared transceiver 5 is placed in the vehicle at a position where it can receive infrared signals from almost every point in the cabin of the car, for instance at the ceiling above the rear-view mirror.

## Claims

1. Operating system of mobile radio telephone comprising a transceiver unit (1), which comprises a handset hook (2) fastened to the unit or connected to it with a cable (s₁), and at least one handset (3) in wireless communication with the transceiver unit (1), **characterized** in that the system comprises further separate remote control device (4) in wireless communication with the transceiver unit (1), the control device being located physically separated from the handset (3).

2. A system operating with infrared signals according to claim 1, **characterized** in that a separate infrared transceiver (5), which is in communication with the handset (3) and the remote control device (4), is connected to the transceiver unit (1) by a cable.

3. A system according to claim 2, **characterized** in that the infrared transceiver (5) operates at different receiving frequencies (f₂, f₃) with the handset (3) and the operating device (4), respectively.

4. A system according to claim 3, **characterized** in that the infrared transceiver (5) transmits signals to the handset (3) on a third frequency (f₁).

## Patentansprüche

1. Betriebssystem für ein mobiles Funktelefon, umfassend
- eine Sendeempfangseinheit (1), die eine an der Einheit befestigte oder mit dieser über ein Kabel (s₁) verbundene Handapparateinhängung (2) aufweist, sowie
- wenigstens einen mit der Sendeempfangseinheit (1) drahtlos verbundenen Handapparat (3),
dadurch gekennzeichnet,
daß das System eine weitere separate, mit der Sendeempfangseinheit (1) drahtlos verbundene Fernsteuerung (4) aufweist, wobei die Steuerung physisch getrennt von dem Handapparat (3) vorgesehen ist.

2. System, das mit Infrarotsignalen arbeitet, nach Anspruch 1,
dadurch gekennzeichnet,
daß ein separater Infrarot-Sendeempfänger (5), der mit dem Handapparat (3) und der Fernsteuerung (4) kommuniziert, mit der Sendeempfangseinheit (1) mit einem Kabel verbunden ist.

3. System nach Anspruch 2,
dadurch gekennzeichnet,
daß der Infrarot-SendeempfΣnger (5) mit dem Handapparat (3) und der Betriebsvorrichtung (4) jeweils auf unterschiedlichen Empfangsfrequenzen (f₂, f₃) arbeitet.

4. System nach Anspruch 3,
dadurch gekennzeichnet,
daß der Infrarot-Sendeempfänger (5) Signale an den Handapparat (3) auf einer dritten Frequenz (f₁) sendet.

## Revendications

1. Système d'exploitation d'un radio-téléphone mobile comprenant une unité émetteur/récepteur (1), laquelle comprend un crochet de combiné (2) fixé à l'unité ou connecté à celle-ci avec un câble (s₁) et au moins un combiné (3) en communication sans fil avec l'unité émetteur/récepteur (1), caractérisé en ce que le système comprend un dispositif de commande à distance séparé supplémentaire (4) en communication sans fil avec l'unité émetteur/récepteur (1), le dispositif de commande étant placé physiquement séparé du combiné (3).

2. Système fonctionnant avec des signaux infra-rouge conformément à la revendication 1, caractérisé en ce qu'un émetteur/récepteur à infra-rouge séparé (5), qui est en communication avec le combiné (3) et avec le dispositif de commande à distance (4), est connecté à l'unité émetteur/récepteur (1) par un câble.

3. Système selon la revendication 2, caractérisé en ce que l'émetteur/récepteur infra-rouge (5) fonctionne à différentes fréquences de réception (f₂, f₃) avec le combiné (3) et le dispositif d'exploitation (4), respectivement.

4. Système selon la revendication 3, caractérisé en ce que l'émetteur/récepteur infra-rouge (5) émet des signaux vers le combiné (3) à une troisième fréquence (f₁).
